# EUROPÄISCHE PATENTANMELDUNG

(11) **EP 0 761 698 A2**
(43) Veröffentlichungstag der Anmeldung: **12.03.1997**
(21) Anmeldenummer: 96113725.4
(22) Anmeldetag: 28.08.1996
(51) Int. Cl.: C08F 20/34, C08F 2/10, C08F 4/04, C08F 26/00

(54) **Verfahren zur Herstellung von Polymerisaten auf Basis basischer Vinylmonomere**

(30) Priorität: 08.09.1995 DE 19533217
(71) Anmelder: BASF AKTIENGESELLSCHAFT, 67056 Ludwigshafen (DE)
(72) Erfinder: Huckestein, Brigitta, Dr., 67105 Schifferstadt (DE); Schehlmann, Volker, Dr., 67354 Römerberg (DE); Sanner, Axel, Dr., 67227 Frankenthal (DE); Blankenburg, Rainer, Dr., 67067 Ludwigshafen (DE)

(57) **Zusammenfassung**

Verfahren zur Herstellung von hydrazinarmen Polymerisaten auf Basis von basisch reagierenden Vinylmonomeren durch radikalisch initiierte Lösungspolymerisation in wäßrigem Medium in Gegenwart einer Azoverbindung, welche an den der Azogruppierung benachbarten Kohlenstoffatomen Carbonsäurealkylestergruppen trägt, als radikalbildende Verbindung.

## Beschreibung

Die vorliegende Erfindung betrifft ein Verfahren zur Herstellung von Polymerisater auf Basis von basisch reagierenden Vinylmonomeren durch radikalisch initiierte Lösungspolymerisation in wäßrigem Medium in Gegenwart einer Azoverbindung, welche an den der Azogruppierung benachbarten Kohlenstoffatomen Carbonsäurealkylestergruppen trägt, als radikalbildende Verbindung.

Die Herstellung von Polymerisaten auf Basis basischer Vinylmonomere wie beispielsweise heterocyclischer N-Vinylverbindungen oder Acrylamid durch radikalische Lösungspolymerisation in wäßrigem Medium in Gegenwart von Azostartern ist an sich bekannt. Dazu werden Lösungen der Monomeren mit dem Azostarter versetzt und bei erhöhter Temperatur polymerisiert.

Besonders im Hinblick auf den Einsatz solcher Polymerisate in kosmetischen oder pharmazeutischen Zubereitungen sollen solche Polymerisate möglichst arm an toxisch bedenklichen Verunreinigungen sein.

Der wegen seiner günstigen Zerfallskinetik bei radikalischen Polymerisationen am häufigsten verwendete Azostarter ist das Azobisisobutyronitril. Dieser Starter gilt jedoch inzwischen wegen der toxischen Eigenschaften seiner Zerfallsprodukte als bedenklich. Hauptzerfallsprodukt ist nämlich das Tetramethylbernsteinsäuredinitril, das aufgrund seiner LD₅₀-Werte (Ratte, oral: 23-30 mg/kg) als sehr giftig einzustufen ist.

Als Ersatz für das Azobis-isobutyronitril bieten sich Azo-biscarbonsäureester an wie beispielsweise Dimethyl-2,2'-azo-bisisobutyrat an, da diese ähnlich günstige Zerfallskinetiken aufweisen und als Hauptzerfallsprodukte die gesundheitlich unbedenklichen Dialkylisobuttersäureester auftreten.

Es hat sich jedoch gezeigt, daß bei Verwendung solcher Radikalstarter bei der Polymerisation von basischen Vinylmonomeren unter herkömmlichen Bedingungen in wäßrigem Medium in den fertigen Polymerisaten Hydrazin in Mengen aufgefunden wurde, die bei einem Einsatz der Polymerisate im Kosmetik- und Pharmabereich nicht tolerierbar sind.

Aufgabe der vorliegenden Erfindung war es, ein Verfahren zur Herstellung solcher Polymerisate zu finden, welches den Einsatz von Dialkyl-2,2'-azobisisobutyraten als Radikalbildner erlaubt, ohne daß die fertigen Polymerisate zu hohe Hydrazingehalte aufweisen.

Demgemäß wurde ein Verfahren zur Herstellung von Polymerisaten auf Basis von basisch reagierenden Viinylmonomeren durch radikalisch initiierte Lösungspolymerisation in wäßrigem Medium in Gegenwart einer Azoverbindung, welche an den der Azogruppierung benachbarten Kohlenstoffatomen Carbonsäurealkylestergruppen trägt, als radikalbildende Verbindung gefunden, dadurch gekennzeichnet ist, daß man vor der Zugabe der radikalbildenden Verbindung die Monomerenlösung durch Zugabe von Säure auf pH-Werte im Bereich von 3 bis 8 einstellt und anschließend die Polymerisation durchführt.

Das erfindungsgemäße Verfahren eignet sich vor allem zur Herstellung von Homo- oder Copolymerisaten heterocyclischer N-Vinylmonomere und/oder des Acrylamids.

Als heterocyclische N-Vinylmonomere kommen N-Vinylpyrrolidon (VP), N-Vinylcaprolactam (VCap) und/oder N-Vinyl-imidazol (VI) in Betracht. Erfindungsgemäß lassen sich neben den Homopolymeren dementsprechend VP/VCap-, VP/VI- oder VI/VCap-Copolymer oder auch die entsprechenden Terpolymere mit beliebigen Mengenverhältnissen der jeweiligen Monomere herstellen. Weiterhin können nach dem erfindungsgemäßen Verfahren neben dem Homopolymeren des Acrylamids auch Copolymere aus den genannten N-Vinylmonomeren und Acrylamid hergestellt werden. Zusätzlich können die Polymerisate noch weitere radikalisch copolymerisierbare Vinyl-Monomere enthalten, beispielsweise Vinylacetat, C₁-C₁₀-Alkyl(meth)acrylate oder N-Alkylacrylamide, wobei die Mengen an solchen Comonomeren bis zu 10 Gew.-%, bezogen auf die Mengen der eingesetzten Monomeren betragen können.

Zur Durchführung des erfindungsgemäßen Verfahrens wird zunächst eine Lösung der Monomeren hergestellt. Als Lösungsmittel kommt vorzugsweise Wasser in Betracht, es können jedoch auch Wasser/Alkohol-Gemische mit Alkohol-Anteilen von bis zu 30 Gew.-% verwendet werden, wobei als Alkohole vorzugsweise Ethanol oder Isopropanol in Betracht kommen. Die Monomeren-Lösungen weisen aufgrund der Basizität der Monomeren üblicherweise pH-Werte größer 8 auf. Dann wird durch Zugabe von Säure der pH-Wert auf Werte im Bereich von 5 bis 7 eingestellt, wobei der Neutralbereich bevorzugt ist. Welcher pH-Bereich eingestellt wird, richtet sich vor allem nach der Art der eingesetzten Monomeren. Bei säureempfindlichen Monomeren wie dem N-Vinylpyrrolidon oder dem N-Vinylcaprolactam empfiehlt es sich im Neutralbereich zu arbeiten, bei säurestabileren Monomeren können auch niedrigere pH-Werte eingestellt werden.

Als Säuren eignen sich erfindungsgemäß niedere Carbonsäuren mit 1 bis 4 C-Atomen wie beispielsweise Ameisensäure, Essigsäure, Oxalsäure oder Milchsäure, wobei Ameisensäure bevorzugt ist, sowie weiterhin anorganische Säuren wie Schwefelsäure, Phosphorsäure, phosphorige Säure oder Salzsäure.

Zu den so vorbereiteten Monomerenlösungen werden anschließend die radikalbildenden Verbindungen gegeben.

Als radikalbildende Substanzen kommen erfindungsgemäß Azostarter in Betracht, welche an dem der Azogruppe benachbarten Kohlenstoffatomen Carbonsäureestergruppen tragen, und durch die allgemeine Formel I 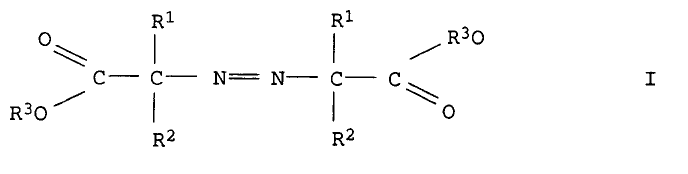 beschrieben werden können, worin R¹ und R² gleich oder verschieden sein können und für Wasserstoff oder C₁-C₄-Alkyl stehen und R³ für einen linearen oder verzweigten C₁-C₈-Alkylrest, bevorzugt einen C₁- bis C₄-Alkylrest.

Bevorzugte Azostarter sind erfindungsgemäß C₁-C₄-Dialkyl-2,2'-azo-bisisobutyrate, wobei Dimethyl-2,2'-azo-bisisobutyrat besonders bevorzugt ist.

Die Menge an Azostarter wird üblicherweise so bemessen, daß 0,005 - 10 Gew.-%, bevorzugt 0,01 bis 5 Gew.-%, bezogen auf die Menge an eingesetzten Monomeren, verwendet werden.

Die Polymerisation wird üblicherweise bei Temperaturen von 60 bis 130, vorzugsweise 70 bis 90°C durchgeführt. Die Zugabe des Azostarters kann vor dem Aufheizen der Monomerenlösung auf die gewünschte Polymerisationstemperatur erfolgen oder vorzugsweise nach dem Aufheizen der Monomerenlösung. Der Azostarter kann auch portionsweise zu der Monomerenlösung gegeben werden.

Zusätzlich können zur Steuerung des Molekulargewichts auch noch Regler wie beispielsweise Mercaptoethanol oder Isopropanol zu der Polymerisationsmischung gegeben werden.

Es kann sich empfehlen im Anschluß an die Polymerisation in bekannter Weise eine Nachpolymerisation zur Senkung des Restmonomerengehalts durchzuführen. Dazu kann beispielsweise eine Nachbehandlung bei einer Temperatur, die höher als die Polymerisationstemperatur liegt, in Gegenwart eines Peroxidstarters durchgeführt werden. Auch eine Nachbehandlung im sauren Milieu wie sie in der WO 93/16114 beschrieben ist, eignet sich zur Senkung des Restmonomerengehalts.

Die wäßrigen oder wäßrig-alkoholischen Lösungen können gewünschtenfalls nach üblichen Verfahren in Pulver überführt werden, beispielsweise durch Sprühtrocknung, Sprühwirbelschichttrocknung, Walzentrocknung oder Bandtrocknung.

Die K-Werte der Polymerisate liegen üblicherweise im Bereich von 50 bis 120. Die Bestimmung der K-Werte erfolgt bei 25°C in 1 gew.-%iger wäßriger Lösung. Die Bestimmung ist beschrieben in "H. Fikentscher, Systematik der Cellulosen aufgrund ihrer Viskosität", Cellulose-Chemie 13 (1932), 58 - 64 und 71 - 74.

Das erfindungsgemäße Verfahren ermöglicht auf einfache Weise die Herstellung von hydrazinarmen Polymerisaten auf Basis von basisch reagierenden Vinyl-Monomeren.

Die Polymerisate weisen Hydrazingehalte <1 ppm auf und eignen sich damit zum Einsatz in pharmazeutischen oder kosmetischen Zubereitungen.

In den nachstehenden Beispielen wurde der Hydrazin-Gehalt der Polymerisate gemäß der im Deutschen Arzneibuch genannten Methode bestimmt:

Die Prüfung erfolgt mit Hilfe der Dünnschichtchromatographie (V.6.20.2) unter Verwendung einer Schicht von silanisiertem Kieselgel HR.

Die Lösungen werden unmittelbar vor Gebrauch hergestellt.

Untersuchungslösung: 2,5 g Substanz werden in 25 ml Wasser gelöst. Nach Zusatz von 0,5 ml einer 5-prozentigen Lösung (m/V) von Salicylaldehyd R in Methanol R wird gemischt und 15 min lang im Wasserbad bei 60°C erhitzt. Die Mischung wird abkühlen gelassen und 2 min lang mit 2,0 ml Toluol R ausgeschüttelt. Nach dem Zentrifugieren wird die klare, obere Schicht verwendet

Referenzlösung: 9 mg Salicylaldazin R werden in Toluol R zu 100 ml gelöst. 1 ml Lösung wird mit Toluol R zu 10 ml verdünnt.

Auf die Platte werden getrennt 10 µl jeder Lösung aufgetragen. Die Chromatographie erfolgt mit einer Mischung von 30 Volumteilen Wasser und 70 Volumteilen Methanol R über eine Laufstrecke von 15 cm. Die Platte wird an der Luft trocken gelassen und im ultravioletten Licht bei 365 nm ausgewertet. Kein im Chromatogramm der Untersuchungslösung auftretender, dem Salicylaldazin entsprechenden Fleck darf größer oder intensiver sein als der Fleck im Chromatogramm der Referenzlösung (1 ppm Hydrazin).

Die K-Werte wurden nach Fikentscher, Cellulosechemie, Bd. 13, S. 58-64 (1932) bei 25°C in 1 gew.-%iger wäßriger Lösung gemessen.

### Beispiel 1

20 g N-Vinylpyrrolidon wurden mit 80 g Wasser versetzt und auf 70°C erhitzt, wobei diese Mischung einen pH-Wert von 9 aufwies. Durch Zugabe von Ameisensäure wurde der pH-Wert auf 7 eingestellt und anschließend 0,015 g Dimethyl-2,2'-azobisisobutyrat zugegeben. Die Reaktionsmischung wurde noch zwei Stunden bei einer Temperatur von 70°C gehalten, dann mit weiteren 0,03 g des Azostarters versetzt und weitere zwei Stunden bei 80°C polymerisiert und das so erhaltene Polymerisat getrocknet. Der Hydrazingehalt des trocknen Pulvers betrug weniger als 1 ppm, der K-Wert 99.

### Beispiel 2

Die Polymerisation erfolgte analog Beispiel 1. Nach Beendigung der Polymerisation wurde das wäßrige Polymerisat mit Ameisensäure auf einen pH-Wert von 4 eingestellt und noch zwei Stunden auf 95°C erhitzt. Der Hydrazingehalt des trockenen Pulvers betrug weniger als 1 ppm, der K-Wert 99.

### Beispiel 3

Eine Mischung aus 15 g N-Vinylpyrrolidin, 5 g N-Vinylcaprolactam und 80 g Wasser wurde auf 80°C erhitzt, mit Essigsäure auf einen pH-Wert von 7 eingestellt, mit 0,015 g Dimethyl-2,2'-Azo-bis-isobutyrat versetzt und für zwei Stunden bei 80°C gehalten. Dann wurden weitere 0,03 g des Azostarters zugegeben und noch zwei Stunden auf 80°C erhitzt. Das getrocknete Polymerisat wies einen Hydrazingehalt von <1 ppm und einen K-Wert von 86 auf.

### Beispiel 4

Die Herstellung erfolgte analog Beispiel 1, jedoch wurde als Azostarter Dibutyl-2,2'-azo-bisisobutyrat verwendet. Die Herstellung des Starters erfolgte gemäß "S. Bizilj et al., Aust. J.Chem., 38, 1657-73 (1985)". Der Hydrazingehalt der 20 gew.-%igen wäßrigen Polymerisatlösung betrug 1 ppm. Der K-Wert des Polymerisats betrug 86.

### Beispiel 5

Eine Mischung aus 40 g Acrylamid und 60 g Wasser, deren pH-Wert bei 9,0 lag, wurde auf 70°C erhitzt und durch Zugabe von Ameisensäure auf einen pH-Wert von 7,0 eingestellt und mit 0,015 g Dimethyl-2,2'-azobisisobutyrat versetzt. Die Polymerisationslösung wurde für zwei Stunden bei 70°C gehalten, dann mit weiteren 0,03 g des Azostarters versetzt und noch zwei Stunden lang auf 80°C erhitzt. Der Hydrazingehalt der 20 gew.-%igen Lösung des Polymerisats betrug <1 ppm.

### Beispiel 6

Eine Lösung aus 19 g N-Vinylpyrrolidon und 1 g Acrylamid in 80 g Wasser wurden auf 70°C erhitzt und durch Zugabe von Ameisensäure auf einen pH-Wert von 7,0 eingestellt und dann mit 0,015 g Dimethyl-2,2'-azobisisobutyrat versetzt. Die Polymerisationslösung wurde zwei Stunden lang bei 70°C gehalten, dann mit weiteren 0,03 g des Azostarters versetzt und noch zwei Stunden lang auf 80°C erhitzt. Der Hydrazingehalt des getrockneten Pulvers betrug <1 ppm. Der K-Wert des Polymerisats betrug 97.

### Vergleichsbeispiel 1

Eine Mischung aus 20 g N-Vinylpyrrolidon, 80 g Wasser und 0,015 g Dimethyl-2,2'-azo-bisisobutyrat wurde auf 70°C erhitzt und zwei Stunden dieser Temperatur gehalten. Dann wurden weitere 0,03 g des Azostarters zugegeben und die Polymerisationsmischung für weitere zwei Stunden bei 80°C gehalten. Nach dem Abkühlen wurde das wäßrige Polymerisat durch Walzentrocknung getrocknet. Der Hydrazingehalt des getrockneten Pulvers betrug 1,5 ppm, der K-Wert 97.

### Vergleichsbeispiel 2

Die Polymerisation erfolgte analog Vergleichsbeispiel 1. Im Anschluß daran wurde der pH-Wert des wäßrigen Polymerisats mit Ameisensäure auf pH 4 abgesenkt und noch zwei Stunden auf 95°C erhitzt. Der Hydrazingehalt des getrockneten Pulvers betrug 10 ppm, der K-Wert 96.

### Vergleichsbeispiel 3

Die Herstellung erfolgte analog Beispiel 5, jedoch ohne Absenken des pH-Wertes vor Beginn der Polymerisation. Der Hydrazingehalt der so erhaltenen Polymerisationslösung betrug 1,8 ppm, der K-Wert des Polymerisats 20,5.

## Patentansprüche

1. Verfahren zur Herstellung von Polymerisaten auf Basis von basisch reagierenden Vinylmonomeren durch radikalisch initiierte Lösungspolymerisation in wäßrigem Medium in Gegenwart einer Azoverbindung, welche an den der Azogruppierung benachbarten Kohlenstoffatomen Carbonsäurealkylestergruppen trägt, als radikalbildende Verbindung, dadurch gekennzeichnet, daß man vor der Zugabe der radikalbildenden Verbindung die Monomerenlösung durch Zugabe von Säure auf pH-Werte im Bereich von 3 bis 8 eingestellt und anschließend die Polymerisation durchführt.

2. Verfahren nach Anspruch 1, dadurch gekennzeichnet, daß man als radikalbildende Verbindung Dimethyl-2,2'-azobisisobutyrat verwendet.
